Europäisches Patentamt

European Patent Office

Office européen des brevets

(19)

(11) Publication number: **0 047 725**
**B1**

(12) **EUROPEAN PATENT SPECIFICATION**

(45) Date of publication of patent specification: **11.12.85**

(51) Int. Cl.⁴: **C 03 B 23/24, E 06 B 3/66**

(21) Application number: **81850149.6**

(22) Date of filing: **04.09.81**

(54) **Heat-insulating window glass.**

(30) Priority: **10.09.80 SE 8006317**

(43) Date of publication of application:
**17.03.82 Bulletin 82/11**

(45) Publication of the grant of the patent:
**11.12.85 Bulletin 85/50**

(84) Designated Contracting States:
**AT CH DE FR GB LI**

(56) References cited:
**DE-C- 281 728**
**DE-C- 387 655**
**US-A-1 370 974**
**US-A-2 783 682**

(73) Proprietor: **Assarsson, Torsten**
**Batterigatan 10**
**S-415 01 Göteborg (SE)**

(72) Inventor: **Assarsson, Torsten**
**Batterigatan 10**
**S-415 01 Göteborg (SE)**

(74) Representative: **Ferkinghoff, Claes-Göran et al**
**ALFONS HEDBERGS PATENTBYRA AB**
**Aschebergsgatan 35**
**S-411 33 Göteborg (SE)**

EP 0 047 725 B1

Courier Press, Leamington Spa, England.

## Description

The invention is concerned with heat-insulating window glass having at least one cavity therein extending approximately to the marginal edges of the glass pane, which cavity has no communication with the external faces of the glass pane and which is evacuated to a gas pressure below 0.1 mbar, and comprising bridging members in the cavity, which members extend transversely relative to the external faces of the glass pane and in a section through the glass pane cover less than 10% of the total area of the glass pane.

It is known to provide supporting elements between the glass panes of a window and to evacuate the gap therebetween. As a result of such evacuation, the transmittance of heat through the window is greatly reduced. On account of the risk of implosion it has hitherto been necessary to dimension the glass as well as the support elements with considerable safety margins and as a consequence such windows are difficult and cumbersome to handle. For the same ·reason this type of windows are expensive to manufacture and their transparency properties are not particularly good.

The US Patent 1 370 974 refers to an insulating window pane using vacuum between the glass sheets and support elements of various configuration to allow the pane to withstand the external air pressure. This prior-art publication describes windows and glass plates which are distinguished from conventional window glass sheets both in appearance and in thickness. Their insulating properties are good. However, the publication does not teach the manufacture of window panes comparable to conventional window glazing as regards thickness and transparency. One reason therefor is that the support or bridging elements used would obstruct the visibility through the glass pane. Only special glass sheets for use e.g. in oven doors may be manufactured in accordance with the teachings of this prior-art publication.

The purpose of the subject invention is to provide a heat-insulating window glass which possesses high transparency properties, which is no more difficult or inconvenient to handle than is conventional window glass, and which is not exceptionally expensive to manufacture.

The window plate glass in accordance with the invention is characterised in that the cavity represents less than 20% of the total volume of the glass pane, that the number of bridging members in the cavity exceeds 10,000 per square meter and that the width of said cavity is about 0.3 mm.

Because heat transfer through conductivity or convection in a gas at low pressure is insignificant the cavity in the glass sheet may be very narrow. Since the delimiting walls of the cavity are closely spaced, the bridging members between the two walls may be of reduced dimensions. Thus, the evacuated volume of the cavity is small, for which reason the risks of damages from shattered glass in the case of an implosion are negligible. The bridging members are small and cover only a small percentage of the surface of the glass, and for this reason the transparency of the glass is effected only to a very small extent.

The invention will be described in closer detail in the following with reference to the accompanying drawings, wherein

Fig. 1 is a broken plan view of a window glass in accordance with the invention,

Figs. 2 and 3 show the window glass in a cross-sectional view in accordance with a first embodiment in views before and after interconnection of the various components,

Figs. 4 and 5 and Figs. 6 and 7 are similar views to Figs. 1 and 2 but show a second and a third embodiment of the glass in accordance with the invention.

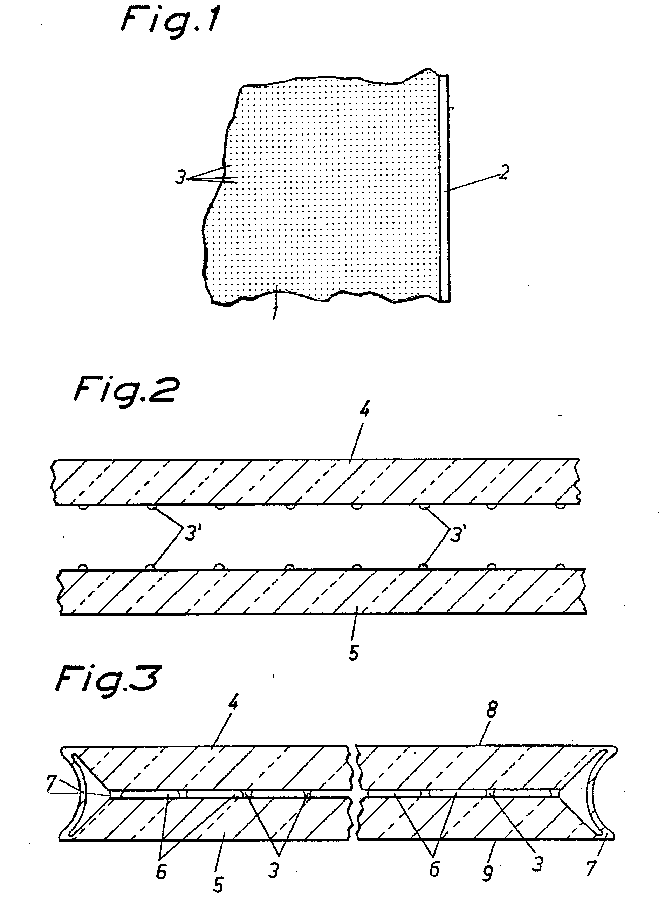

The glass sheet 1 in Fig. 1 is provided with marginal portions 2 and internally thereof are provided bridging elements 3. The latter have but a very small extension in the surface of vision but their number is considerable.

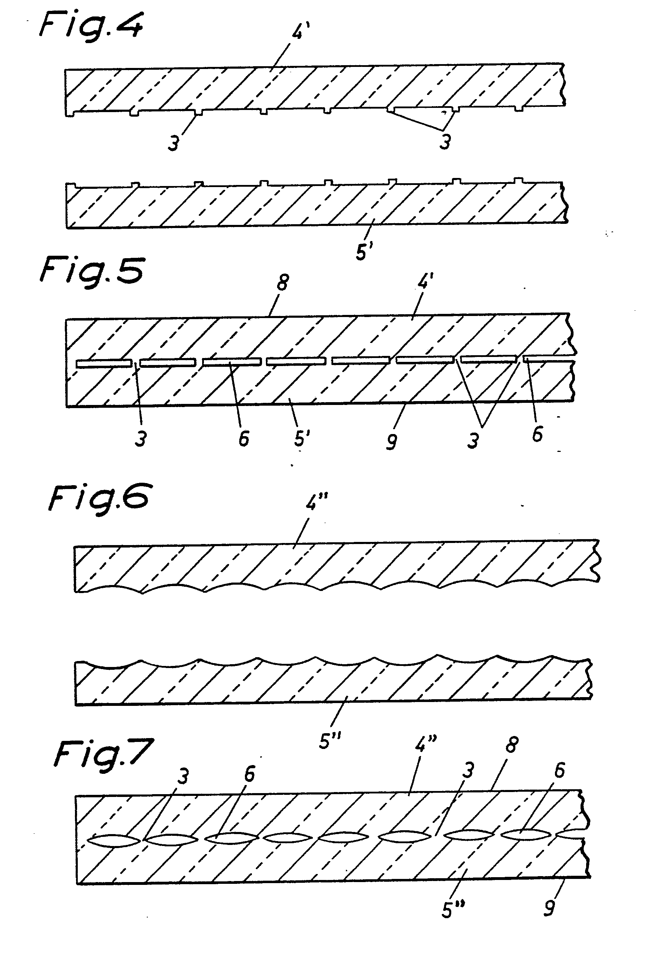

One embodiment of the glass sheet in accordance with the invention is shown in Figs. 2 and 3. The window pane is formed by the application on two glass sheets 4 and 5 of thermosetting plastics or glass having a comparatively low melting point in the form of small droplets 3' in a predetermined array of dots, whereafter the two glass sheets 4, 5 are brought close together with the droplets in facing relationship. The droplets on each sheet may rise above the sheet level by e.g. 0.1—0.15 millimeters. When the droplets are brought together concave bridging elements 3 are formed, the cross-sectional size of which varies from a maximum value closely adjacent the sheet to a minimum value halfway therebetween. When the plastics has set, alternatively the glass has solidified, the cavity 6 intermediate the sheets 4, 5 is evacuated and sealed, for instance by fusing edge strips 7 of glass with the edge faces of the glass sheets. The thermosetting plastics, alternatively the glass, in the droplets could be mixed with e.g. crushed silica which increases the strength of the bridging elements. By admixture of carbon black or some other similar colouring agent the occurrence of light refractional phenomena in the bridging elements 3 is avoided. In this manner the glass may be "tinted" to the desired degree of light transmission.

In accordance with the second embodiment shown in Figs. 4 and 5 the bridging elements 3 consist of protuberances formed in the glass sheets 4' and 5'. Protuberances or bumps of this kind may be produced during the manufacture of the glass sheets through rolling one face of the sheet. The sheets are then interconnected in a heating process during which the two sheets are joined together to one single unit, whereupon the cavity between the two slabs is evacuated. The protuberances could be tinted in the same manner as the plastics and glass in accordance with the preceding embodiment to eliminate the generation of light reflexes in the window pane.

The third embodiment concerns a translucent but not transparent plate glass in accordance with the invention. Just like in accordance with the previous embodiments the glass comprises two sheets 4″ and 5″ which are joined together into one glass with a cavity 6 between the sheets. In this embodiment one face of the glass is exposed to a rolling operation during which a wavy pattern is imparted to the glass face and when the two glass sheets are brought together with the wavy patterns in opposite relationship, the waves of the pattern form the desired supporting or bridging elements 3 and the cavities 6. The two glass sheets are interconnected in the manner described previously.

The projections formed in a translucent but not transparent glass could also have the shape of ridges forming a striped or square pattern extending over the inner faces of the glass layers. In this manner the glass may be given decorative light-refractional properties while at the same time cleaning of the glass panes is just as easy as in case of ordinary plate glass since the external faces of the window are even and smooth.

The window glass in accordance with the invention may also be dome-shaped. When this is the case fewer bridging elements are required, since the dome-shape as such improves the structural strength and durability of the glass.

In the glass in accordance with the invention is manufactured with an average gap of 0.3 millimeters between the sheets 4 and 5. As a consequence, the total volume of the enclosed cavity/cavities is quite small and therefore the risk of damages from shattered glass is negligible in case of an implosion. A glass sheet of this kind may replace ordinary window glass in normal window frames and can be mounted by means of known technique.

When the glass is provided with bridging elements 3 between the glass sheets 4, 5 having a thickness of 0.1 millimeters and in a number of between 30 and 100 per $cm^2$ the human eye cannot discern their presence at a distance exceeding 1 meter, provided the bridging elements are tinted in a mat black.

Since the internal supporting elements between the two sheets of the glass cover only a few percent of the total volume of the glass the heat transfer from the external face 8 of the glass to the internal face 9 will amount to a few percent only of the heat transfer in window panes of homogeneous plate glass.

The invention is not limited to the embodiments described above but a variety of modifications are possible within the scope of the appended claims. The edges of the glass sheet may, for instance, have a different shape than the ones shown.

## Claims

1. A heat-insulating glass window pane having at least one cavity (6) therein extending approximately to the marginal edges (2) of the glass pane which cavity (6) has no communication with the external faces (8, 9) of the glass pane (1) and which is evacuated to a gas pressure below 0.1 mbar, and comprising bridging members (3) in the cavity (6), which members extend transversely relative to the external faces (8, 9) of the glass pane (1) and in a section through the glass pane (1) cover less than 10% of the total area of the glass pane, characterised in that the cavity (6) represents less than 20% of the total volume of the glass pane, that the number of bridging members (3) in the cavity (6) exceeds 10,000 per square meter and that the width of said cavity is about 0.3 mm.

2. A method of manufacturing a heat-insulating glass window pane having at least one cavity (6) therein which has no communication with the external faces (8, 9) of the glass and which is evacuated to a gas pressure below 0.1 mbar, and comprising bridging members (3) in said cavity (6), said members extending transversely relative to the external faces of the glass, characterised by

applying droplets (3′) in an amount exceeding 10,000 per square meter in a dot-screen pattern on one of the sides of at least one of two glass sheets (4, 5), said droplets (3′) consisting of a thermosetting resin, alternatively of glass having a comparatively low melting point,

bringing the glass sheets (4, 5) together with the droplets (3′) abutting the opposite glass sheet and thereafter pulling the sheets slightly apart until the desired gap between the sheets of about 0.3 mm is obtained,

evacuating the cavity between the sheets after setting of the plastics, alternatively solidifying of the glass droplets, and

sealing the cavity (6).

3. A method as claimed in claim 2, characterised by the sealing of the cavity by means of a border strip (7) which extends in the shape of an arch towards the cavity (6) and which is interconnected with the glass (4, 5) by fusion.

## Revendications

1. Panneau de vitre thermiquement isolant comportant à l'intérieur au moins une cavité (6) qui s'étend approximativement jusqu'aux bords marginaux (2) du panneau de vitre, cette cavité (6) ne présentant aucune communication avec les faces externes (8, 9) du panneau de vitre (1) et étant évacuée jusqu'à une pression de gaz inférieure à 0,1 mbar, et comportant dans la cavité (6) des éléments de liaison (3) qui s'étendent transversalement par rapport aux faces externes (8, 9) du panneau de vitre (1) et qui dans une vue en coupe du panneau de vitre (1) couvrent moins de 10% de la surface totale du panneau de vitre, caractérisé en ce que la cavité (6) représente moins de 20% du volume total du panneau de vitre, le nombre d'éléments de liaison (3) dans la cavité (6) dépasse 10,000 au mètre carré et la largeur de la cavité est d'environ 0,3 mm.

2. Procédé de fabrication d'un panneau de vitre thermiquement isolant comportant à l'intérieur au moins une cavité (6) qui ne présente aucune communication avec les faces externes (8, 9) du verre et est évacuée jusqu'à une pression de gaz intérieure à 0,1 mbar, et comportant dans la cavité (6) des éléments de liaison (3) qui s'étendent transversalement par rapport aux faces externes du verre, caractérisé en ce que

l'on applique sur l'un des côtés d'au moins un des deux panneaux de verre (4, 5) et selon un motif en réseau des gouttelettes (3') en nombre dépassant 10,000 au mètre carré, ces gouttelettes (3') étant constituées de résine thermodurcissable ou, alternativement, de verre dont le point de fusion est relativement bas,

l'on approche les panneaux de verre (4, 5) l'un de l'autre de telle manière que les gouttelettes (3') viennent au contact du panneau de verre opposé et l'on écarte ensuite légèrement les panneaux l'un de l'autre jusqu'à ce que l'on obtienne l'espacement désiré d'environ 0,3 mm entre les panneaux,

l'on évacue la cavité comprise entre les panneaux après durcissement de la matière plastique ou, alternativement, après solidification des gouttelettes de verre, et l'on scelle la cavité (6).

3. Procédé selon la revendication 2, caractérisé en ce que l'on scelle la cavité au moyen d'une bande de bordure (7) qui s'étend sous forme arquée vers la cavité (6) et qui est reliée par fusion aux panneaux le verre (4, 5).

**Patentansprüche**

1. Wärmeisolierende Fensterglasscheibe mit mindestens einem darin enthaltenen Hohlraum (6), der sich etwa bis zu den Kanten am Rand der Fensterglasscheibe erstreckt, wobei dieser Hohlraum (6) mit den Aussenflächen (8, 9) der Fensterglasscheibe (1) keine Verbindung aufweist und bis auf einen Gasdruck unter 0,1 mbar entleert ist, umfassend im Hohlraum (6) angeordnete Überbrückungsstege (3), die sich senkrecht zu den Aussenflächen (8, 9) der Fensterglasscheibe (1) erstrecken und in einer Schnittansicht durch die Fensterglasscheibe (1) weniger als 10% der gesamten Fläche der Fensterglasscheibe überdecken, dadurch gekennzeichnet, dass der Hohlraum (6) weniger als 20% des gesamten Volumens der Fensterglasscheibe ausmacht, die Anzahl der Überbrückungsstege (3) in Hohlraum (6) mehr als 10,000 pro Quadratmeter beträgt und die Breite des Hohlraums etwa 0,3 mm beträgt.

2. Verfahren zur Herstellung einer Wärmeisolierenden Fensterglasscheibe mit mindestens einem darin enthaltenen Hohlraum (6), der mit den Aussenflächen (8, 9) des Glases keine Verbindung aufweist und bis auf einen Gasdruck unter 0,1 mbar entleert ist, umfassend im Hohlraum (6) angeordnete Überbrückungsstege (3), die sich senkrecht zu den Aussenflächen des Glases erstrecken, gekennzeichnet durch

Anbringen von Tröpfchen (3') in einer Anzahl von mehr als 10,000 pro Quadratmeter nach einem gerasterten Muster auf einer der Seiten von mindestens einer von zwei Glasscheiben (4, 5), wobei diese Tröpfchen (3') aus einem wärmehärtbaren Harz oder alternativ aus Glas von relativ niedrigem Schmelzpunkt bestehen,

Aneinanderbringen der Glasscheiben (4, 5), wobei die Tröpfchen (3') an der gegenüberliegenden Glasscheibe anliegen, und danach leichtes Auseinanderziehen der Glasscheiben, bis der gewünschte Abstand von etwa 0,3 mm zwischen den Scheiben erhalten, wird,

Entleeren des Hohlraumes zwischen den Scheiben nach dem Aushärten des Kunststoffes oder alternativ nach dem Erstarren der Glaströpfchen, und

Versiegeln des Hohlraumes (6).

3. Verfahren nach Anspruch 2, gekennzeichnet durch Versiegeln des Hohlraumes mittels eines Randstreifens (7), der sich bodenförmig zum Hohlraum (6) hin erstreckt und mit den Glasscheiben (4, 5) durch Verschmelzen verbunden ist.

*Fig.1*

*Fig.2*

*Fig.3*

Fig.4

Fig.5

Fig.6

Fig.7